# EUROPÄISCHE PATENTSCHRIFT

(11) **EP 4 616 679 B1**
(45) Veröffentlichungstag und Bekanntmachung des Hinweises auf die Patenterteilung: **16.09.2026**
(21) Anmeldenummer: 23798971.0
(22) Anmeldetag: 06.11.2023
(51) Int. Cl.: H05B 6/06, H05B 6/12

(54) **INDUKTIONSENERGIEÜBERTRAGUNGSSYSTEM**
INDUCTION ENERGY TRANSMISSION SYSTEM
SYSTÈME DE TRANSMISSION D'ÉNERGIE PAR INDUCTION

(30) Priorität: 11.11.2022 EP 22383089
(43) Veröffentlichungstag der Anmeldung: 17.09.2025
(73) Patentinhaber: BSH Hausgeräte GmbH, 81739 München (DE)
(72) Erfinder: PLUMED VELILLA, Emilio, 50007 Zaragoza (ES); VILLUENDAS LOPEZ, Francisco, 50009 Zaragoza (ES); MOYA NOGUES, Jesus Manuel, 50001 Zaragoza (ES); PASCUAL AZA, Jorge, 50018 Zaragoza (ES); TESA BETES, Jorge, 50018 Zaragoza (ES); LLORENTE GIL, Sergio, 50009 Zaragoza (ES)
(86) Internationale Anmeldenummer: PCT/EP2023/080836
(87) Internationale Veröffentlichungsnummer: WO 2024/099964

(56) Entgegenhaltungen:
- WO-A1-2022/223286
- WO-A1-2022/233654
- WO-A1-2022/233660

## Beschreibung

Die Erfindung betrifft ein Induktionsenergieübertragungssystem nach dem Oberbegriff des Anspruchs 1 und ein Verfahren zum Betrieb eines Induktionsenergieübertragungssystems nach dem Oberbegriff des Anspruchs 12.

Aus dem Stand der Technik sind bereits Induktionsenergieübertragungssysteme zur induktiven Übertragung von Energie von einer Primärspule einer Versorgungseinheit auf eine Sekundärspule einer Aufstelleinheit bekannt. Beispielsweise sind Induktionskochfelder bekannt, welche neben einer induktiven Beheizung von Gargeschirr auch zur induktiven Energieversorgung von Haushaltskleingeräten vorgesehen sind. Eine Steuerung der Versorgungseinheit durch eine Steuereinheit basiert dabei auf einem Parametersatz, wobei bei manchen bekannten Induktionsenergieübertragungssystemen zumindest ein Paramater des Parametersatzes, beispielsweise eine Eigeninduktivität der Sekundärspule, ein Energiebedarf oder eine elektrische Gesamtlast, drahtlos, beispielsweise per NFC, von der Aufstelleinheit an die Steuereinheit übertragen wird. Die Parameter des Parametersatzes, werden bei bisher bekannten Induktionsenergieübertragungssystemen als konstant angenommen und können beispielsweise in einer Speichereinheit einer Steuereinheit zur Steuerung der Versorgungseinheit gespeichert und/oder von der Aufstelleinheit an die Steuereinheit übertragen worden sein, sodass individuelle Einflüsse bestimmter Aufstelleinheiten auf einige Parameter des Parametersatzes, beispielsweise auf eine Eigeninduktivität eines Versorgungsinduktionselements, bislang nicht berücksichtigt werden und eine Steuerung daher relativ ungenau und ineffizient ist.

WO 2022/233654 A1 offenbart ein Induktionsenergieübertragungssystem gemäß dem Oberbegriff des Anspruches 1.

Die Aufgabe der Erfindung besteht insbesondere, aber nicht beschränkt darauf, darin, ein gattungsgemäßes System mit verbesserten Eigenschaften hinsichtlich einer Effizienz bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere Induktionsgarsystem, mit einer Aufstellplatte, mit einer unterhalb der Aufstellplatte angeordneten Versorgungseinheit, welche zumindest ein Versorgungsinduktionselement zur induktiven Bereitstellung von Energie aufweist, mit einer Steuereinheit zur Steuerung der Versorgungseinheit, mit zumindest einer Aufstelleinheit zum Aufstellen auf die Aufstellplatte, wobei die Aufstelleinheit zumindest ein Aufnahmeinduktionselement zu einem Empfang der induktiv bereitgestellten Energie und ein Sicherheitsschaltelement zum Aktivieren und Deaktivieren das Aufnahmeinduktionselements aufweist, und mit einer Kommunikationseinheit zur drahtlosen Kommunikation zwischen der Aufstelleinheit und der Steuereinheit, wobei die Steuereinheit dazu vorgesehen ist, innerhalb eines Kommunikationszeitfensters, in welchem das Aufnahmeinduktionselement mittels des Sicherheitsschaltelements deaktiviert ist, mit der Aufstelleinheit zum Austausch zumindest eines Parameters über die Kommunikationseinheit zu kommunizieren.

Es wird vorgeschlagen, dass die Steuereinheit dazu vorgesehen ist, innerhalb des Kommunikationszeitfensters eine Eigeninduktivität des Versorgungsinduktionselements zu messen.

Durch eine derartige Ausgestaltung kann vorteilhaft ein Induktionsenergieübertragungssystem mit verbesserten Eigenschaften hinsichtlich einer Effizienz bereitgestellt werden. Es kann insbesondere ein energieeffizienterer Betrieb des Induktionsenergieübertragungssystems ermöglicht werden, da basierend auf der Messung der Eigeninduktivität des Versorgungsinduktionselements eine genauere Bestimmung von Parametern eines Parametersatzes zur Steuerung der Versorgungseinheit durch die Steuereinheit bestimmt werden kann, wodurch beispielsweise vorteilhaft Schaltverluste verringert und/oder eine Überversorgung der Aufstelleinheit vermieden werden können. Ferner kann vorteilhaft eine Kosteneffizienz verbessert werden, da für die Messung der Eigeninduktivität des Versorgungsinduktionselements keine zusätzlichen Komponenten erforderlich sind. Zudem kann vorteilhaft eine Sicherheit erhöht werden. Beispielsweise ermöglicht die Messung der Eigeninduktivität des Versorgungsinduktionselements innerhalb des Kommunikationszeitfensters eine Bestimmung eines Schaltzustands des Sicherheitsschaltelements, sodass beispielsweise ein festsitzendes Sicherheitsschaltelement bereits während des Kommunikationszeitfensters detektiert und entsprechende Sicherheitsmaßnahmen eingeleitet werden können. Ferner ist eine Erkennung von, insbesondere großen, Fremdobjekten leichter und ebenfalls bereits innerhalb des Kommunikationszeitfensters anhand der gemessenen Eigeninduktivität des Versorgungsinduktionselements möglich, sodass auch in solchen Fällen entsprechende Sicherheitsmaßnahmen eingeleitet und potentiellen Gefahren durch Fremdobjekte während eines Betriebs der Versorgungseinheit vorgebeugt werden kann.

Das Induktionsenergieübertragungssystem weist zumindest eine Hauptfunktionalität in Form einer drahtlosen Energieübertragung, insbesondere in einer drahtlosen Energieversorgung von Aufstelleinheiten, auf. In einer vorteilhaften Ausgestaltung ist das Induktionsenergieübertragungssystem als ein Induktionsgarsystem mit zumindest einer von einer reinen Garfunktion abweichenden weiteren Hauptfunktion, insbesondere zumindest einer Energieversorgung und einem Betrieb von Haushaltskleingeräten, ausgebildet. Beispielsweise könnte das Induktionsenergieübertragungssystem als ein Induktionsbackofensystem und/oder als ein Induktionsgrillsystem ausgebildet sein. Insbesondere könnte die Versorgungseinheit als Teil eines Induktionsbackofens und/oder als Teil eines Induktionsgrills ausgebildet sein. Vorzugsweise ist das als Induktionsgarsystem ausgebildete Induktionsenergieübertragungssystem als ein Induktionskochfeldsystem ausgebildet. Die Versorgungseinheit ist dann insbesondere als Teil eines Induktionskochfelds ausgebildet. In einer weiteren vorteilhaften Ausgestaltung ist das Induktionsenergieübertragungssystem als ein Küchenenergieversorgungssystem ausgebildet und kann neben einer Hauptfunktion in Form einer Energieversorgung und eines Betriebs von Haushaltskleingeräten zusätzlich zur Bereitstellung von Garfunktionen vorgesehen sein.

Unter einer "Aufstellplatte" soll zumindest eine, insbesondere plattenartige, Einheit des Induktionsenergieübertragungssystems verstanden werden, welche zu einem Aufstellen wenigstens einer Aufstelleinheit und/oder zu einem Auflegen wenigstens eines Garguts vorgesehen ist. Die Aufstellplatte könnte beispielsweise als eine Arbeitsplatte, insbesondere als eine Küchenarbeitsplatte, oder als ein Teilbereich zumindest einer Arbeitsplatte, insbesondere zumindest einer Küchenarbeitsplatte, insbesondere des Induktionsenergieübertragungssystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Vorzugsweise ist die Aufstellplatte aus einem nichtmetallischen Werkstoff hergestellt. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Kunststoff und/oder aus Keramik gebildet sein. In dem vorliegenden Dokument beziehen sich Lagebezeichnungen, wie beispielsweise "unterhalb" oder "oberhalb", auf einen montierten Zustand der Aufstellplatte, sofern dies nicht explizit anderweitig beschrieben ist. In dem montierten Zustand ist die Versorgungseinheit vorzugsweise unterhalb der Aufstellplatte angeordnet.

Unter einer "Versorgungseinheit" soll eine Einheit verstanden werden, welche in wenigstens einem Betriebszustand induktiv Energie bereitstellt und welche insbesondere eine Hauptfunktionalität in Form einer Energiebereitstellung aufweist. Zu der Bereitstellung von Energie weist die Versorgungseinheit zumindest ein Versorgungsinduktionselement auf, welches insbesondere zumindest eine Spule, insbesondere zumindest eine Primärspule, aufweist und/oder als eine Spule ausgebildet ist und welches insbesondere in dem Betriebszustand induktiv Energie bereitstellt. Die Versorgungseinheit könnte zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche in dem Betriebszustand jeweils induktiv Energie bereitstellen könnten, und zwar insbesondere an ein einziges Aufnahmeinduktionselement oder an zumindest zwei oder mehrere Aufnahmeinduktionselemente zumindest einer Aufstelleinheit und/oder zumindest einer weiteren Aufstelleinheit. Zumindest ein Teil der Versorgungsinduktionselemente könnten in einem Nahbereich zueinander angeordnet, beispielsweise in einer Reihe und/oder in Form einer Matrix angeordnet sein. Vorzugsweise weist die Versorgungseinheit zumindest einen Kompensationskondensator auf, welcher mit dem Versorgungsinduktionselement elektrisch parallel oder elektrisch in Reihe geschaltet sein kann, und welcher insbesondere zu einer Blindleistungskompensation vorgesehen sein kann.

Unter einer "Steuereinheit" soll eine elektronische Einheit verstanden werden, die dazu vorgesehen ist, zumindest die Versorgungseinheit zu steuern und/oder zu regeln. Die Steuereinheit umfasst eine Recheneinheit und insbesondere zusätzlich zur Recheneinheit eine Speichereinheit mit zumindest einem darin gespeicherten Steuer- und/oder Regelprogramm, das dazu vorgesehen ist, von der Recheneinheit ausgeführt zu werden. Die Steuereinheit weist zumindest einen Wechselrichtereinheit auf. Vorzugsweise führt die Wechselrichtereinheit in dem Betriebszustand eine Frequenzwandlung durch und wandelt insbesondere eine eingangsseitige niederfrequente Wechselspannung in eine ausgangsseitige hochfrequente Wechselspannung um. Vorzugsweise weist die niederfrequente Wechselspannung eine Frequenz von höchstens 100 Hz auf. Vorzugsweise weist die hochfrequente Wechselspannung eine Frequenz von mindestens 1000 Hz auf. Vorzugsweise ist die Wechselrichtereinheit dazu vorgesehen, die Einstellung der durch das zumindest eine Versorgungsinduktionselement induktiv bereitgestellten Energie durch Einstellung der hochfrequenten Wechselspannung vorzunehmen. Vorzugsweise umfasst die Steuereinheit zumindest einen Gleichrichter. Die Wechselrichtereinheit weist zumindest einen Wechselrichter mit zumindest einem, vorzugsweise zumindest zwei, Wechselrichterschaltelement(en) auf. Vorzugsweise erzeugt das Wechselrichterschaltelement zu einem Betrieb des zumindest einen Versorgungsinduktionselements einen oszillierenden elektrischen Strom, vorzugsweise mit einer Frequenz von zumindest 15 kHz, insbesondere von wenigstens 17 kHz und vorteilhaft von mindestens 20 kHz. Vorzugsweise umfasst die Wechselrichtereinheit zumindest zwei Wechselrichterschaltelemente, welche bevorzugt als Bipolartransistoren mit isolierter Gateelektrode ausgebildet sind und besonders vorteilhaft zumindest einen Dämpfungskondensator.

Unter einer "Aufstelleinheit" soll eine Einheit verstanden werden, welche in wenigstens einem Betriebszustand induktiv Energie empfängt und die induktiv empfangene Energie zumindest teilweise in zumindest eine weitere Energieform zur Bereitstellung zumindest einer Hauptfunktion umwandelt. Beispielsweise könnte die von der Aufstelleinheit induktiv empfangene Energie in dem Betriebszustand, insbesondere direkt, in zumindest eine weitere Energieform umgewandelt werden, wie beispielsweise in Wärme. Alternativ oder zusätzlich könnte die Aufstelleinheit zumindest einen elektrischen Verbraucher, beispielsweise einen Elektromotor oder dergleichen, aufweisen. Die Aufstelleinheit weist zumindest eine Aufnahmeeinheit mit einem Aufnahmeinduktionselement zu dem Empfang der induktiv bereitgestellten Energie auf. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie, insbesondere von dem Versorgungsinduktionselement, empfangen könnten. Die Aufstelleinheit könnte beispielsweise als ein Gargeschirr ausgebildet sein. Das Gargeschirr weist vorzugsweise zumindest einen Lebensmittelaufnahmeraum auf und wandelt die induktiv empfangene Energie in dem Betriebszustand zumindest teilweise in Wärme zu einer Beheizung von in dem Lebensmittelaufnahmeraum angeordneten Lebensmitteln um. Vorzugsweise weist die als Gargeschirr ausgebildete Aufstelleinheit zumindest eine weitere Einheit, zu einer Bereitstellung zumindest einer weiteren Funktion, welche über eine reine Beheizung von Lebensmitteln hinausgeht und/oder von einer Beheizung von Lebensmitteln abweicht, auf. Beispielsweise könnte die weitere Einheit als ein Temperatursensor oder als eine Rühreinheit oder dergleichen ausgebildet sein. Alternativ könnte die Aufstelleinheit als ein Haushaltskleingerät ausgebildet sein. Vorzugsweise handelt es sich bei dem Haushaltskleingerät um ein standortungebundenes Haushaltsgerät, welches zumindest das Aufnahmeinduktionselement und zumindest eine Funktionseinheit, welche in einem Betriebszustand zumindest eine Haushaltsgerätefunktion bereitstellt, aufweist. Unter "standortungebunden" soll in diesem Zusammenhang verstanden werden, dass das Haushaltskleingerät in einem Haushalt durch einen Nutzer frei, und insbesondere ohne Hilfsmittel, positionierbar ist, insbesondere im Unterschied zu einem Haushaltsgroßgerät, welches an einer bestimmten Position in einem Haushalt fest positioniert und/oder installiert ist, wie beispielsweise ein Backofen oder ein Kühlschrank. Vorzugsweise ist das Haushaltskleingerät als ein Küchenkleingerät ausgebildet und stellt in dem Betriebszustand zumindest eine Hauptfunktion zu einer Bearbeitung von Lebensmitteln bereit. Das Haushaltskleingerät könnte, ohne darauf beschränkt zu sein, beispielsweise als eine Küchenmaschine und/oder als ein Mixer und/oder als ein Rührer und/oder als eine Mühle und/oder als eine Küchenwaage oder als ein Wasserkocher oder als eine Kaffeemaschine oder als ein Reiskocher oder als ein Milchaufschäumer oder als eine Fritteuse oder als ein Toaster oder als ein Entsafter oder als eine Schneidemaschine oder dergleichen ausgebildet sein.

Das Aufnahmeinduktionselement der Aufstelleinheit umfasst zumindest eine Sekundärspule und/oder ist als eine Sekundärspule ausgebildet. In einem Betriebszustand der Aufstelleinheit versorgt das Aufnahmeinduktionselement zumindest einen Verbraucher der Aufstelleinheit mit elektrischer Energie. Darüber hinaus ist denkbar, dass die Aufstelleinheit einen Energiespeicher, insbesondere einen Akkumulator, aufweist, welcher dazu vorgesehen ist, eine über das Aufnahmeinduktionselement empfangene elektrische Energie in einem Ladezustand zu speichern und in einem Entladezustand zu der Versorgung der Funktionseinheit bereitzustellen. Vorzugsweise weist die Aufnahmeeinheit zumindest einen Kompensationskondensator auf, welcher mit dem Aufnahmeinduktionselement elektrisch parallel oder elektrisch in Reihe geschaltet ist, und welcher insbesondere zu einer Blindleistungskompensation vorgesehen sein kann.

Unter einem "Sicherheitsschaltelement" soll ein Element der Aufstelleinheit verstanden werden, das dazu vorgesehen ist, zwischen dem Aufnahmeinduktionselement und zumindest einem weiteren elektrischen und/oder elektronischen Element der Aufstelleinheit, beispielsweise dem Kompensationskondensator oder einem anderen Kondensator eines Sekundärschwingkreises der Aufstelleinheit und/oder einem elektrischen Verbraucher der Aufstelleinheit und/oder dergleichen, eine elektrisch leitende Verbindung herzustellen oder zu trennen. Das Sicherheitsschaltelement der Aufstelleinheit ist dazu vorgesehen, das Aufnahmeinduktionselement während eines Betriebszeitfensters zu aktivieren und während des Kommunikationszeitfensters zu deaktivieren. Bei geschlossenem Sicherheitsschaltelement ist das Aufnahmeinduktionselement aktiviert und ein Stromfluss von dem Aufnahmeinduktionselement zu zumindest einem weiteren elektrischen und/oder elektronischen Element(en) der Aufstelleinheit ist über das Sicherheitsschaltelement ermöglicht. Bei geöffnetem Schaltelement ist das Aufnahmeinduktionselement deaktiviert und ein Stromfluss von dem Aufnahmeinduktionselement zu sämtlichen weiteren elektrischen und/oder elektronischen Elementen der Aufstelleinheit ist durch das Sicherheitsschaltelement unterbrochen. Das Sicherheitsschaltelement kann als ein mechanisches und/oder elektromechanisches Schaltelement, insbesondere als ein Relais, ausgebildet sein. Denkbar ist auch, dass das Sicherheitsschaltelement als Halbleiterschaltelement, insbesondere als Transistor, beispielsweise als Metall-Oxid-Halbleiter-Feldeffekttransistor (MOSFET) oder Organischer Feldeffekttransistor (OFET) oder als Bipolartransistor mit isolierter Gate-Elektrode (IGBT) oder dergleichen ausgebildet ist.

Die Kommunikationseinheit ist vorzugsweise zu einer bidirektionalen drahtlosen Datenübertragung, das heißt sowohl zu einem drahtlosen Empfang als auch zu einem drahtlosen Senden von Daten zwischen der Steuereinheit und der Aufstelleinheit vorgesehen. Vorzugsweise weist die Kommunikationseinheit zumindest ein Kommunikationselement auf, welches mit der Steuereinheit verbunden und insbesondere zu einem drahtlosen Empfangen und Senden von Daten vorgesehen ist. Vorzugsweise weist die Kommunikationseinheit zumindest ein weiteres Kommunikationselement auf, welches innerhalb der Aufstelleinheit angeordnet und insbesondere zu einem drahtlosen Empfangen und Senden von Daten vorgesehen ist. Die Kommunikationseinheit könnte zu einer drahtlosen Datenübertragung zwischen der Aufstelleinheit und der Steuereinheit per RFID, oder per WIFI, oder per Bluetooth oder per ZigBee oder zur drahtlosen Datenübertragung nach einem anderen geeigneten Standard vorgesehen sein. Vorzugsweise ist die Kommunikationseinheit zu einer drahtlosen Datenübertragung zwischen der Aufstelleinheit und der Steuereinheit per NFC vorgesehen. Vorzugsweise ist die Steuereinheit dazu vorgesehen, den zumindest einen Parameter des Parametersatzes drahtlos von der Aufstelleinheit zu empfangen und zwar mittels der Kommunikationseinheit.

Ein Austausch des zumindest einen Parameters zwischen der Aufstelleinheit und der Steuereinheit erfolgt vorzugsweise drahtlos mittels der Kommunikationseinheit. Vorzugsweise ist die Aufstelleinheit dazu vorgesehen, innerhalb des Kommunikationszeitfensters den zumindest einen Parameter, vorzugsweise drahtlos mittels der Kommunikationseinheit, an die Steuereinheit zu übertragen, wobei es sich bei dem Paramater um einen Parameter eines Parametersatzes handelt, welchen die Steuereinheit zur Steuerung der Versorgungseinheit heranzieht. Unter einem "Parametersatz" soll eine Mehrzahl von zumindest zwei Parametern verstanden werden, welchen die Steuereinheit zur Steuerung der Versorgung heranzieht und anhand derer die Steuereinheit die durch die Versorgungseinheit induktiv bereitgestellte Energie entsprechend einer Art der Aufstelleinheit und/oder entsprechend eines, insbesondere durch einen Nutzer des Induktionsenergieübertragungssystems wählbaren, aktuellen Betriebszustands der Aufstelleinheit steuert. Der Parametersatz umfasst vorzugsweise zumindest eine konstante konstruktive und/oder geometrische Kenngröße des Versorgungsinduktionselements und/oder des Aufnahmeinduktionselements. Konstruktive und/oder geometrische Kenngrößen könnten dabei, ohne darauf beschränkt zu sein, beispielsweise eine Form und/oder Größe, insbesondere einen Radius und/oder Innendurchmesser und/oder einen Außendurchmesser, und/oder eine Querschnittsfläche und/oder eine Wicklungszahl und/oder ein Material und/oder eine räumliche Position des Aufnahmeinduktionselements innerhalb der Aufstelleinheit umfassen und/oder einen vertikalen Abstand des Versorgungsinduktionselements zu der Aufstellplatte und/oder dergleichen sein. Vorzugsweise umfasst zumindest ein Parameter des Parametersatzes eine, insbesondere zeitlich veränderliche, elektrische Kenngröße des Versorgungsinduktionselements und/oder des Aufnahmeinduktionselements, beispielsweise Beträge von elektrischen Widerständen und/oder Impedanzen in einem Primärschaltkreis der Versorgungseinheit und/oder in einem Sekundärschaltkreis der Aufnahmeeinheit und/oder Induktivitäten, insbesondere Eigeninduktivitäten, und/oder magnetische Flussdichten des Versorgungsinduktionselements und/oder des Aufnahmeinduktionselements und/oder eine Resonanzfrequenz und/oder eine Materialkonstante, beispielsweise eine magnetische Permeabilität eines magnetischen Flussbündelungselements der Versorgungseinheit und/oder der Aufnahmeeinheit. Ferner kann zumindest ein Parameter des Betriebsparametersatzes zumindest eine Betriebskenngröße der Aufstelleinheit, beispielsweise eine Maximalleistung und/oder eine Minimalleistung und/oder Anzahl von Leistungsstufen und/oder eine Anzahl und/oder Art von betreibbaren elektrischen Lasten und/oder eine in einem Betriebszustand benötigte Spannung und/oder Stromstärke umfassen.

Unter einem "Kommunikationszeitfenster" soll ein Zeitraum verstanden werden, innerhalb dessen sich das Induktionsenergieübertragungssystem in einem Betriebszustand befindet, wobei die Versorgungseinheit durch die Steuereinheit deaktiviert ist und über die Kommunikationseinheit eine Kommunikationsverbindung zwischen der Steuereinheit und der Aufstelleinheit besteht. Unter einem "Betriebszeitfenster" soll ein Zeitraum verstanden werden, innerhalb dessen sich das Induktionsenergieübertragungssystem in einem Betriebszustand befindet, wobei die Versorgungseinheit durch die Steuereinheit aktiviert ist. Innerhalb des Betriebszeitfensters kann über die Kommunikationseinheit eine Kommunikationsverbindung zwischen der Steuereinheit und der Aufstelleinheit bestehen oder unterbrochen sein.

Die Steuereinheit könnte dazu vorgesehen sein, die Eigeninduktivität des Versorgungsinduktionselements direkt zu messen. Vorzugsweise ist die Steuereinheit dazu vorgesehen, die Eigeninduktivität des Versorgungsinduktionselements indirekt zu messen. Vorzugsweise erfolgt eine indirekte Messung der Eigeninduktivität des Versorgungsinduktionselements durch die Steuereinheit durch Messung einer mittleren Stromstärke am Ausgang der Wechselrichtereinheit, durch Messung einer mittleren Spannung am Ausgang der Wechselrichtereinheit sowie durch Messung einer während eines Messvorgangs über die Wechselrichtereinheit bereitgestellten mittleren Leistung, wobei die Steuereinheit dazu vorgesehen ist, die Eigeninduktivität mittels zumindest einer Rechenvorschrift, insbesondere einer oder mehrere Formeln, aus der mittleren Stromstärke, der mittleren Spannung und der mittleren Leistung zu bestimmten.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit dazu vorgesehen ist, die gemessene Eigeninduktivität zur Bestimmung eines Parametersatzes zur Steuerung der Versorgungseinheit innerhalb eines Betriebszeitfensters heranzuziehen. Hierdurch kann vorteilhaft eine Effizienz weiter verbessert werden. Es kann insbesondere ein Parametersatz durch die Steuereinheit bestimmt werden, welcher auf die Aufstelleinheit abgestimmt ist, sodass eine besonders gezielte Steuerung der Versorgungseinheit und damit ein besonders effizienter und verlustarmer Betrieb der Versorgungseinheit ermöglicht werden kann. Beispielsweise kann die Steuereinheit dazu vorgesehen sein, die gemessene Eigeninduktivität zur Bestimmung des Parametersatzes zur Steuerung der Versorgungseinheit innerhalb des Betriebszeitfensters heranzuziehen, indem sie die gemessene Eigeninduktivität des Versorgungsinduktionselements mit einer als Parameter des Parametersatzes innerhalb der Speichereinheit gespeicherten Eigeninduktivität des Versorgungsinduktionselements vergleicht.

Zudem wird vorgeschlagen, dass die Steuereinheit dazu vorgesehen ist, zumindest einen Korrekturfaktor zumindest eines Parameters des Parametersatzes zu bestimmen und hierfür die gemessene Eigeninduktivität als Ausgangswert heranzuziehen. Hierdurch kann vorteilhaft eine Effizient weiter verbessert werden. Beispielsweise kann die Steuereinheit dazu vorgesehen sein, im Fall einer Abweichung zwischen der gespeicherten Eigeninduktivität und der gemessenen Eigeninduktivität den Korrekturfaktor aus einem Quotienten zwischen der gespeicherten Eigeninduktivität und der gemessenen Eigeninduktivität zu bestimmen. Es sind zudem weitere dem Fachmann als sinnvoll erscheinende Methoden zur Berechnung des zumindest einen Korrekturfaktors auf Basis der gemessenen Eigeninduktivität denkbar, beispielsweise mittels einer oder mehrerer Regressionsgleichung(en), welche die gemessene Eigeninduktivität als Ausgangswert beinhalten.

Des Weiteren wird vorgeschlagen, dass die Steuereinheit dazu vorgesehen ist, die gemessene Eigeninduktivität zur Bestimmung eines neuen Parametersatzes zur Steuerung der Versorgungseinheit zu bestimmen. Hierdurch kann vorteilhaft eine Effizienz weiter verbessert werden. Beispielsweise kann die Steuereinheit dazu vorgesehen sein, zumindest einen Parameter des Parametersatzes, bei welchem es sich um die gespeicherte Eigeninduktivität handeln kann, durch die gemessene Eigeninduktivität zu ersetzen und so den neuen Parametersatz zu bestimmen.

Darüber hinaus wird vorgeschlagen, dass die Steuereinheit dazu vorgesehen ist, anhand der gemessenen Eigeninduktivität einen Schaltzustand des Sicherheitsschaltelements zu bestimmen. Durch eine derartige Ausgestaltung kann vorteilhaft eine Sicherheit erhöht werden. Das Sicherheitsschaltelement kann sich entweder in einem ersten Schaltzustand, in welchem es geschlossen ist, oder in einem zweiten Schaltzustand, in welchem es geöffnet ist, befinden, wobei sich eine durch die Steuereinheit gemessene Eigeninduktivität des Versorgungsinduktionselements in dem ersten Schaltzustand des Sicherheitsschaltelements von einer durch die Steuereinheit gemessenen Eigeninduktivität des Versorgungsinduktionselements in dem zweiten Schaltzustand unterscheidet. Insbesondere ist die gemessene Eigeninduktivität des Versorgungsinduktionselements in dem ersten Schaltzustand des Sicherheitsschaltelements niedriger als in dem zweiten Schaltzustand. Ferner wird vorgeschlagen, dass die Steuereinheit, im Falle eines während des Kommunikationszeitfensters geschlossenen Sicherheitsschaltelements, dazu vorgesehen ist, zumindest eine Sicherheitsmaßnahme zumindest zu initiieren. Hierdurch kann vorteilhaft eine Sicherheit weiter erhöht werden. Es kann insbesondere ein defektes, beispielsweise festsitzendes Sicherheitsschaltelement, anhand der gemessenen Eigeninduktivität erkannt werden, sodass damit einhergehenden Gefahren vorgebeugt werden kann. Bei der Sicherheitsmaßnahme, welche die Steuereinheit im Falle eines während des Kommunikationszeitfensters geschlossenen Sicherheitsschaltelements zumindest initiiert, kann es sich, ohne darauf beschränkt zu sein, beispielsweise um ein Blockieren eines Leistungsbetriebs der Versorgungseinheit und/oder um eine Ausgabe eines Warnhinweises, beispielsweise über eine Ausgabeeinheit des Induktionsenergieübertragungssystems, an einen Nutzer handeln.

Zudem wird vorgeschlagen, dass die Steuereinheit dazu vorgesehen ist, innerhalb des Kommunikationszeitfensters eine Objekterkennung von auf der Aufstellplatte befindlichen Objekten durchzuführen. Hierdurch können vorteilhaft ein Bedienkomfort sowie eine Sicherheit erhöht werden. Vorzugsweise erfolgt die Objekterkennung anhand der durch die Steuereinheit gemessenen Eigeninduktivität des Versorgungsinduktionselements, wobei verschiedene oberhalb der Aufstellplatte befindliche Objekte durch die Steuereinheit anhand der gemessenen Eigeninduktivität des Versorgungsinduktionselements voneinander unterscheidbar sind. Unter einem "Objekt" soll in diesem Zusammenhang ein oberhalb der Aufstellplatte befindliches, zumindest teilweise metallisches, Element verstanden werden, welches mit einem durch das Versorgungsinduktionselement bereitgestellten elektromagnetischen Wechselfeld wechselwirkt. Bei dem Objekt kann es sich beispielsweise um das Aufnahmeinduktionselement der Aufstelleinheit und/oder um ein klassisches Gargeschirr, beispielsweise einen metallischen Kochtopf oder dergleichen, oder um ein Fremdobjekt handeln. Unter einem "Fremdobjekt" soll in diesem Zusammenhang ein, insbesondere zumindest teilweise metallisches, Element, beispielsweise ein metallisches Besteck oder dergleichen, verstanden werden, welches nicht zu einem Empfang der durch die Versorgungseinheit induktiv bereitgestellten Energie vorgesehen ist. Darüber hinaus wird vorgeschlagen, dass die Steuereinheit dazu vorgesehen ist, die gemessene Eigeninduktivität des Versorgungsinduktionselements zur Unterscheidung zwischen Aufstelleinheiten und Fremdobjekten heranzuziehen. Hierdurch kann vorteilhaft eine Sicherheit weiter erhöht werden. Des Weiteren wird vorgeschlagen, dass die Steuereinheit, im Falle einer Erkennung eines Fremdobjekts, dazu vorgesehen ist, zumindest eine Sicherheitsmaßnahme zumindest zu initiieren. Hierdurch kann vorteilhaft eine Sicherheit noch weiter erhöht werden. Es kann insbesondere eine Gefahr eines Heiz- und/oder Energieversorgungsbetriebs durch die Versorgungseinheit, im Falle eines oberhalb der Aufstellplatte befindlichen Fremdobjekts, verhindert werden. Bei der Sicherheitsmaßnahme, welche die Steuereinheit im Falle einer Erkennung eines Fremdobjekts zumindest initiiert, kann es sich, ohne darauf beschränkt zu sein, beispielsweise um ein Blockieren eines Leistungsbetriebs der Versorgungseinheit und/oder um eine Ausgabe eines Warnhinweises, beispielsweise über die Ausgabeeinheit des Induktionsenergieübertragungssystems, an einen Nutzer handeln.

Die Erfindung betrifft ferner eine Aufstelleinheit, insbesondere ein Haushaltskleingerät, eines Induktionsenergieübertragungssystems nach einer der vorhergehend beschriebenen Ausgestaltungen. Eine derartige Aufstelleinheit zeichnet sich insbesondere durch ein erhöhtes Maß an Effizienz in einem Betrieb innerhalb des Induktionsenergieübertragungssystems aus.

Die Erfindung betrifft zudem ein Induktionshaushaltsgerät, insbesondere ein Induktionskochfeld, eines Induktionsenergieübertragungssystems nach einer der vorhergehend beschriebenen Ausgestaltungen, welches die Versorgungseinheit und die Steuereinheit umfasst. Ein derartiges Induktionshaushaltsgerät zeichnet sich insbesondere durch einen ein erhöhtes Maß an Effizienz in einem Betrieb innerhalb des Induktionsenergieübertragungssystems aus.

Die Erfindung geht ferner aus von einem Verfahren zum Betrieb eines Induktionsenergieübertragungssystems, insbesondere eines Induktionsgarsystems, insbesondere nach einem der vorhergehenden Ansprüche, mit einer Aufstellplatte, mit einer unterhalb der Aufstellplatte angeordneten Versorgungseinheit, welche zumindest ein Versorgungsinduktionselement zur induktiven Bereitstellung von Energie aufweist, mit zumindest einer Aufstelleinheit zum Aufstellen auf die Aufstellplatte, wobei die Aufstelleinheit zumindest ein Aufnahmeinduktionselement zu einem Empfang der induktiv bereitgestellten Energie und ein Sicherheitsschaltelement zum Aktivieren und Deaktivieren das Aufnahmeinduktionselements aufweist, wobei innerhalb eines Kommunikationszeitfensters, in welchem das Aufnahmeinduktionselement mittels des Sicherheitsschaltelements deaktiviert ist, zumindest ein Parameter ausgetauscht wird. Es wird vorgeschlagen, dass innerhalb des Kommunikationszeitfensters eine Eigeninduktivität des Versorgungsinduktionselements gemessen wird. Durch ein derartiges Verfahren kann vorteilhaft ein besonders effizienter und sicherer Betrieb des Induktionsenergieübertragungssystems ermöglicht werden.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung ist ein Ausführungsbeispiel der Erfindung dargestellt.

Es zeigen:
- Fig. 1: Ein Induktionsenergieübertragungssystem mit einer Versorgungseinheit, welche zumindest ein Versorgungsinduktionselement aufweist, einer Steuereinheit zur Steuerung der Versorgungseinheit, einer Aufstelleinheit und einer weiteren Aufstelleinheit, welche jeweils ein Aufnahmeinduktionselement aufweisen, in einer schematischen Darstellung,
- Fig. 2: ein schematisches Diagramm zur Darstellung eines Kommunikationszeitfensters und eines Betriebszeitfensters,
- Fig. 3: ein schematisches Blockschaltbild zur Darstellung einer Funktionsweise der Steuereinheit,
- Fig. 4: ein schematisches Diagramm zur Darstellung der Funktionsweise einer Objekterkennung durch die Steuereinheit,
- Fig. 5: zwei schematische Diagramme zur Darstellung von Verläufen einer Ersatzimpedanz und einer Eigeninduktivität des Versorgungsinduktionselements und
- Fig. 6: ein schematisches Verfahrensfließbild zur Darstellung eines Verfahrens zum Betrieb des Induktionsenergieübertragungssystems

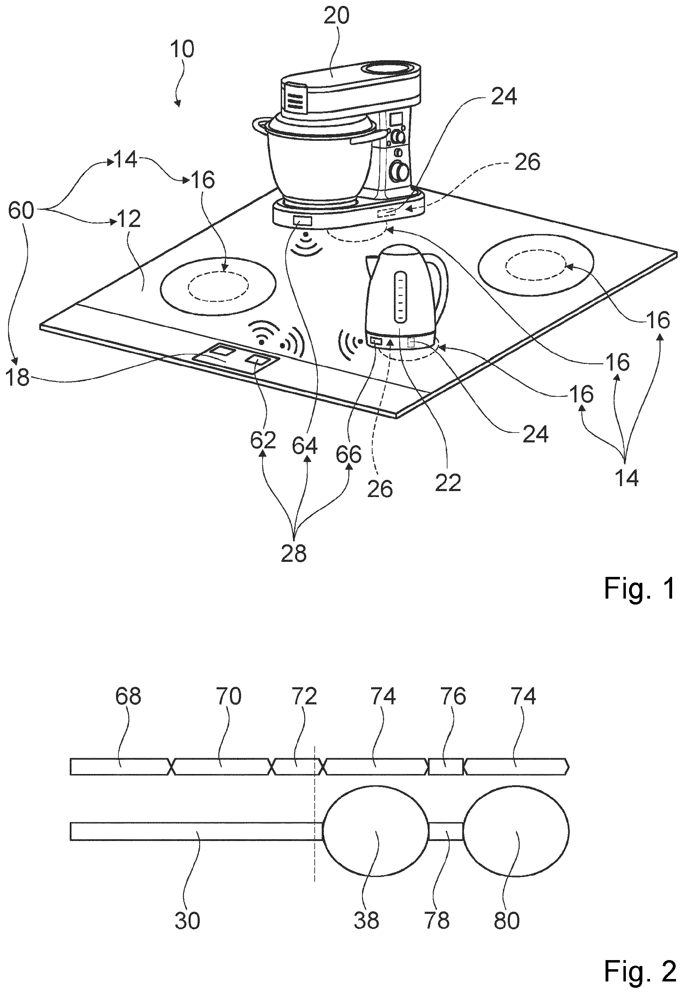

Figur 1 zeigt ein Induktionsenergieübertragungssystem 10 in einer schematischen Darstellung. Das Induktionsenergieübertragungssystem 10 weist eine Aufstellplatte 12 auf. Das Induktionsenergieübertragungssystem 10 ist vorliegend als ein Induktionsgarsystem ausgebildet und umfasst ein Induktionshaushaltsgerät 60. Vorliegend ist das Induktionshaushaltsgerät 60 als ein Induktionskochfeld ausgebildet. Die Aufstellplatte 12 ist als eine Kochfeldplatte ausgebildet und vorliegend Teil des Induktionshaushaltsgeräts 60.

Das Induktionsenergieübertragungssystem 10 weist eine Versorgungseinheit 14 auf. Die Versorgungseinheit 14 weist zumindest ein unterhalb der Aufstellplatte 12 angeordnetes Versorgungsinduktionselement 16 zur induktiven Bereitstellung von Energie auf. Vorliegend umfasst die Versorgungseinheit 14 insgesamt vier Versorgungsinduktionselemente 16, welche jeweils unterhalb der Aufstellplatte 12 angeordnet sind. Alternativ könnte die Versorgungseinheit 14 jedoch eine beliebige andere Anzahl an Versorgungsinduktionselementen 16 aufweisen, welche größer oder gleich eins ist.

Das Induktionsenergieübertragungssystem 10 weist eine Aufstelleinheit 20 auf. Die Aufstelleinheit 20 weist ein Aufnahmeinduktionselement 24 zu einem Empfang der durch die Versorgungseinheit 14 induktiv bereitgestellten Energie und ein Sicherheitsschaltelement 26 zum Aktivieren und Deaktivieren des Aufnahmeinduktionselements 24 auf. Vorliegend ist die Aufstelleinheit 20 als ein Haushaltskleingerät ausgebildet, und zwar als eine Küchenmaschine. Das Induktionsenergieübertragungssystem 10 weist vorliegend eine weitere Aufstelleinheit 22 auf. Die weitere Aufstelleinheit 22 weist ebenfalls ein Aufnahmeinduktionselement 24 zu einem Empfang der durch die Versorgungseinheit 14 induktiv bereitgestellten Energie und ein Sicherheitsschaltelement 26 zum Aktivieren und Deaktivieren des Aufnahmeinduktionselements 24 auf. Die weitere Aufstelleinheit 22 ist vorliegend als ein weiteres Haushaltskleingerät ausgebildet, und zwar als ein Wasserkocher.

Das Induktionsenergieübertragungssystem 10 weist eine Steuereinheit 18 zur Steuerung der Versorgungseinheit 14 auf. Die Steuereinheit 18 umfasst zur Steuerung der Versorgungseinheit 14 zumindest eine Wechselrichtereinheit (nicht dargestellt).

Das Induktionsenergieübertragungssystem 10 weist eine Kommunikationseinheit 28 auf. Die Kommunikationseinheit 28 ist zu einer drahtlosen Kommunikation zwischen der Aufstelleinheit 20 und der Steuereinheit 18 vorgesehen. Vorliegend ist die Kommunikationseinheit 28 außerdem auch zu einer drahtlosen Kommunikation zwischen der weiteren Aufstelleinheit 22 und der Steuereinheit 18 vorgesehen. Die Kommunikationseinheit 28 weist ein Kommunikationselement 62 auf, welches mit der Steuereinheit 18 verbunden und zu einem drahtlosen Senden und Empfangen von Daten vorgesehen ist. Die Kommunikationseinheit 28 weist ein weiteres Kommunikationselement 64 auf, welches in der Aufstelleinheit 20 angeordnet und zu einem drahtlosen Senden und Empfangen von Daten vorgesehen ist. Die Kommunikationseinheit 28 weist außerdem ein weiteres Kommunikationselement 66 auf, welches in der weiteren Aufstelleinheit 22 angeordnet und zu einem drahtlosen Senden und Empfangen von Daten vorgesehen ist. Vorliegend ist die Kommunikationseinheit 28 als eine NFC-Kommunikationseinheit ausgebildet, und zu einer drahtlosen Datenübertragung per NFC zwischen der Steuereinheit 18 und der Aufstelleinheit 20 und/oder der weiteren Aufstelleinheit 22 vorgesehen.

Die folgende Beschreibung der Funktionsweise des Induktionsenergieübertragungssystems 10 erfolgt anhand der Aufstelleinheit 20, wobei getroffene Aussagen sinngemäß auch auf die weitere Aufstelleinheit 22 übertragen werden können.

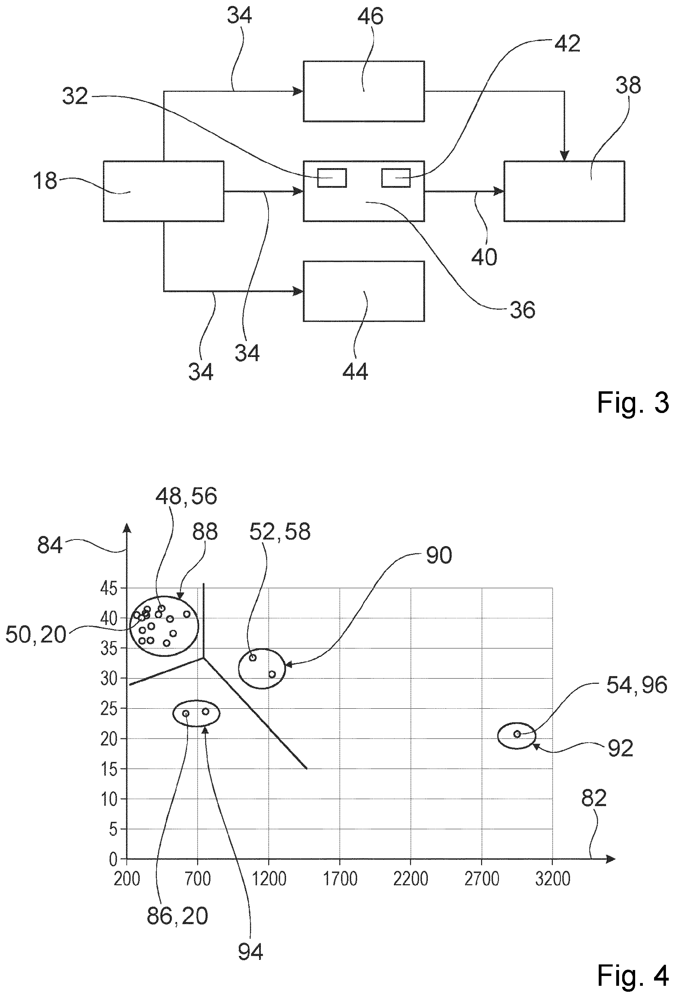

Die Steuereinheit 18 ist dazu vorgesehen, innerhalb eines Kommunikationszeitfensters 30 (vgl. Figur 2), in welchem das Aufnahmeinduktionselement 24 mittels des Sicherheitsschaltelements 26 deaktiviert ist, mit der Aufstelleinheit 20 zum Ausstauch zumindest eines Parameters 32 (vgl. Figur 3) über die Kommunikationseinheit 28 zu kommunizieren.

Die Steuereinheit 18 ist außerdem dazu vorgesehen, innerhalb des Kommunikationszeitfensters 30 eine Eigeninduktivität 34 (vgl. Figur 3) des Versorgungsinduktionselements 16 zu messen. Vorliegend ist die Steuereinheit 18 dazu vorgesehen, die Eigeninduktivität 34 indirekt zu messen. Zur indirekten Messung der Eigeninduktivität 34 ist die Steuereinheit 18 dazu vorgesehen, die Wechselrichtereinheit zum Betrieb des Versorgungsinduktionselements 16 anzusteuern und eine mittlere Spannung und eine mittlere Stromstärke am Ausgang der Wechselrichtereinheit zu messen. Ferner ist die Steuereinheit 18 dazu vorgesehen, anhand der nachfolgenden Gleichung (1) einen Ersatzwiderstand des Versorgungsinduktionselements 16 aus einer mittleren elektrischen Leistung zum Betrieb der Wechselrichtereinheit und der mittleren am Ausgang der Wechselrichtereinheit gemessenen Stromstärke zu bestimmen: ${R}_{eq} = \frac{{P}_{avg}}{{{I}_{rms}}^{2}}$ wobei in der Gleichung (1) der Ausdruck R_{eq} für den Ersatzwiderstand, der Ausdruck P_{avg} für die mittlere elektrische Leistung und der Ausdruck Iᵣₘₛ für die am Ausgang der Wechselrichtereinheit gemessene mittlere Stromstärke steht.

Zudem ist die Steuereinheit 18 dazu vorgesehen, anhand der nachfolgenden Gleichung (2) eine Ersatzimpedanz des Versorgungsinduktionselements 16 zu bestimmen: ${Z}_{eq}^{2} = {V}_{rms}^{2} + {I}_{rms}^{2}$ wobei in der Gleichung (2) der Ausdruck Z_{eq} für die Ersatzimpedanz des Versorgungsinduktionselements 16, der Ausdruck Vᵣₘₛ für die am Ausgang der Wechselrichtereinheit gemessene mittlere Spannung und Iᵣₘₛ für die am Ausgang der Wechselrichtereinheit gemessene mittlere Stromstärke steht.

Die Steuereinheit 18 ist zudem dazu vorgesehen, eine Reaktanz des Versorgungsinduktionselements 16 anhand der nachfolgenden Gleichung (3) zu ermitteln: ${X}_{eq}^{2} = {Z}_{eq}^{2} - {R}_{eq}^{2}$ wobei in der Gleichung (3) der Ausdruck X_{eq} für die Reaktanz, der Ausdruck Z_{eq} für die Ersatzimpedanz und der Ausdruck R_{eq} für den Ersatzwiderstand steht.

Schließlich ist die Steuereinheit 18 dazu vorgesehen, die Eigeninduktivität 34 anhand der folgenden Gleichung (4) zu bestimmen: ${L}_{eq} = \frac{{X}_{eq}}{2 πf}$ wobei in der Gleichung (4) der Ausdruck L_{eq} für die Eigeninduktivität 34, der Ausdruck X_{eq} für die Reaktanz, der Ausdruck π für die Kreiszahl und der Ausdruck f für eine Schaltfrequenz, mit welcher die Steuereinheit 18 die Wechselrichtereinheit betreibt, stehen.

Figur 2 zeigt ein schematisches Diagramm zur Darstellung des Kommunikationszeitfensters 30 und eines Betriebszeitfensters 38. Zu Beginn des Kommunikationszeitfensters 30 erfolgt eine Begrüßungsphase 68. In der Begrüßungsphase 68 erfolgt eine erste Kommunikation zwischen der Steuereinheit 18 und der Aufstelleinheit 20 über die Kommunikationseinheit 28, welche in der englischen Fachsprache auch als "NFC-Handshake" bezeichnet wird. In einer darauffolgenden Austauschphase 70 erfolgt der Ausstauch des zumindest eines Parameters 32 (vgl. Figur 3) über die Kommunikationseinheit 28, wobei die Steuereinheit 18 eine Leistungsanfrage stellt und die Aufstelleinheit 20 einen benötigten Leistungsbedarf übermittelt. In einer darauffolgenden Mess- und Prüfphase 72 wird unter anderem die Eigeninduktivität 34 des Versorgungsinduktionselements 16 gemessen. Nach erfolgreicher Mess- und Prüfphase 72 wird das Sicherheitsschaltelement 26 geschlossen und die Steuereinheit 18 aktiviert die Versorgungseinheit 14. Es beginnt das Betriebszeitfenster 38, welches zumindest eine Leistungsphase 74 umfasst, innerhalb derer die Steuereinheit 18 die Versorgungseinheit 14 in einem Leistungsbetrieb betreibt und das zumindest eine Versorgungsinduktionselement 16 induktiv Energie an das Aufnahmeinduktionselement 24 bereitstellt. Dem Betriebszeitfenster 38 kann ein weiteres Kommunikationszeitfenster 78 folgen, in welchem die induktive Energieversorgung durch das Versorgungsinduktionselement 16 unterbrochen wird. Das weitere Kommunikationszeitfenster 78 kann eine Zwischenkommunikationsphase 76 umfassen, innerhalb derer ein weiterer Austausch zwischen der Steuereinheit 18 und der Aufstelleinheit 20 erfolgen kann, beispielsweise ein Austausch zumindest eines weiteren Parameters (nicht dargestellt), zum Beispiel ein veränderter Leistungsbedarf. Im Anschluss an das weitere Kommunikationszeitfenster 78 kann wiederum ein weiteres Betriebszeitfenster 80 folgen, welches wiederum zumindest eine Leistungsphase 74 umfasst.

Figur 3 zeigt ein schematisches Blockschaltbild zur Darstellung einer Funktionsweise der Steuereinheit 18. Die Steuereinheit 18 ist dazu vorgesehen, die gemessene Eigeninduktivität 34 zur Bestimmung eines Parametersatzes 36 zur Steuerung der Versorgungseinheit 14 innerhalb des Betriebszeitfensters 38 heranzuziehen. Während des Kommunikationszeitfensters 30 empfängt die Steuereinheit 18 beispielsweise den Parameter 32, wobei es sich beispielsweise um eine Eigeninduktivität des Aufnahmeinduktionselements 24 handeln kann. Ferner kann in einer Speichereinheit (nicht dargestellt) der Steuereinheit 18 zumindest ein Parameter 42 des Parametersatzes 36 gespeichert sein, wobei es sich bei dem Parameter 42 beispielsweise um eine gespeicherte Eigeninduktivität des Versorgungsinduktionselements 16 handeln kann. Beispielsweise kann die Steuereinheit 18 dazu vorgesehen sein, die gemessene Eigeninduktivität 34 zur Bestimmung des Parametersatzes 36 zur Steuerung der Versorgungseinheit 14 innerhalb des Betriebszeitfensters 38 heranzuziehen, indem sie die gemessene Eigeninduktivität 34 des Versorgungsinduktionselements 16 mit der als Parameter 42 des Parametersatzes 36 gespeicherten Eigeninduktivität des Versorgungsinduktionselements 16 vergleicht.

Die Steuereinheit 18 ist dazu vorgesehen, zumindest einen Korrekturfaktor 40 zumindest eines Parameters 42 des Parametersatzes 36 zu bestimmen und hierfür die gemessene Eigeninduktivität 34 als Ausgangswert heranzuziehen. Beispielsweise kann die Steuereinheit 18 dazu vorgesehen sein, im Fall einer Abweichung zwischen der gespeicherten Eigeninduktivität und der gemessenen Eigeninduktivität 34 den Korrekturfaktor 40 aus einem Quotienten zwischen der gespeicherten Eigeninduktivität und der gemessenen Eigeninduktivität 34 zu bestimmen.

Die Steuereinheit 18 ist dazu vorgesehen, die gemessene Eigeninduktivität 34 zur Bestimmung eines neuen Parametersatzes 44 zur Steuerung der Versorgungseinheit 14 zu bestimmen. Beispielsweise kann die Steuereinheit 18 dazu vorgesehen sein, zumindest einen Parameter, beispielsweise den Parameter 42, des Parametersatzes 36 durch die gemessene Eigeninduktivität 34 zu ersetzen und so den neuen Parametersatz 44 zu bestimmen.

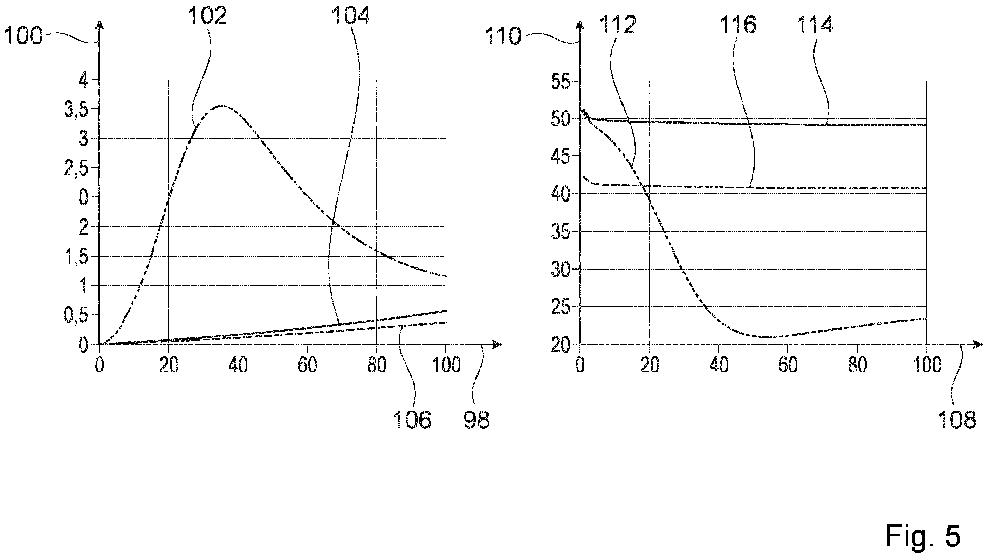

Die Steuereinheit 18 ist dazu vorgesehen, anhand der gemessenen Eigeninduktivität 34 einen Schaltzustand 46 des Sicherheitsschaltelements 26 zu bestimmen. Die Funktionsweise der Bestimmung des Schaltzustands 46 durch die Steuereinheit 18 wird nachfolgend anhand der Figuren 4 und 5 erläutert.

Die Steuereinheit 18 ist dazu vorgesehen, im Falle eines während des Kommunikationszeitfensters 30 geschlossenen Sicherheitsschaltelements 26, zumindest eine Sicherheitsmaßnahme zumindest zu initiieren. Beispielsweise kann die Steuereinheit 18 für den Fall, dass das Sicherheitsschaltelement 26 während des Kommunikationszeitfensters 30 geschlossen ist, als Sicherheitsmaßnahme einen Leistungsbetrieb der Versorgungseinheit 14 blockieren. Zudem kann die Steuereinheit 18 für den Fall, dass das Sicherheitsschaltelement 26 während des Kommunikationszeitfensters 30 geschlossen ist, als Sicherheitsmaßnahme einen Warnhinweis an den Nutzer ausgeben, beispielsweise mittels einer Ausgabeeinheit (nicht dargestellt) des Induktionsenergieübertragungssystems 10.

Figur 4 zeigt ein schematisches Diagramm zur Darstellung einer Funktionsweise einer Objekterkennung durch die Steuereinheit 18. Die Steuereinheit 18 ist dazu vorgesehen, innerhalb des Kommunikationszeitfensters 30 eine Objekterkennung von auf der Aufstellplatte 12 befindlichen Objekten 48, 50, 52, 54 durchzuführen. Die Steuereinheit 18 ist ferner dazu vorgesehen, die gemessene Eigeninduktivität 34 zur Unterscheidung zwischen Aufstelleinheiten 20, 22 und Fremdobjekten 56, 58 heranzuziehen.

Auf einer Abszisse 82 des Diagramms ist die Ersatzimpedanz des Versorgungsinduktionselements 16 in mΩ aufgetragen. Auf einer Ordinate 84 des Diagramms ist die gemessene Eigeninduktivität 34 des Versorgungsinduktionselements 16 in µH aufgetragen. In dem Diagramm sind beispielhaft verschiedene Messpunkte von Messungen, welche die Steuereinheit 18 innerhalb des Kommunikationszeitfensters 30 durchführt, dargestellt. Messpunkte, welche innerhalb eines ersten Bereichs 88 des Diagramms liegen, repräsentieren Objekte 48, 50, bei welchen es sich entweder um eine Aufstelleinheit 20, 22 mit deaktiviertem Aufnahmeinduktionselement 24 oder um kleinere metallische Fremdobjekte 56 handeln kann. Messpunkte, welche innerhalb eines zweiten Bereichs 90 des Diagramms liegen, repräsentieren große Fremdobjekte, beispielsweise ein Objekt 52, bei welchem es sich um ein Fremdobjekt 58, vorliegend zum Beispiel um eine große Stahlscheibe, handelt. Messpunkte, welche innerhalb eines dritten Bereichs 92 des Diagramms liegen, repräsentieren klassisches Gargeschirr, beispielsweise ein Objekt 54, bei welchem es sich vorliegend um einen Kochtopf 96 handelt. Messpunkte, welche in einem vierten Bereich 94 des Diagramms liegen, repräsentieren Objekte, bei welchen es sich um Aufstelleinheiten 20, 22 mit aktiviertem Aufnahmeinduktionselement 24 handelt.

Beispielsweise handelt es sich bei einem Objekt 86 um die Aufstelleinheit 20 bei geschlossenem Sicherheitsschaltelement 26. Wird während des Kommunikationszeitfensters 30 ein Messwert innerhalb des vierten Bereichs 94 erhalten, so schließt die Steuereinheit 18 daraus, dass das Sicherheitsschaltelement 30 geschlossen ist und initiiert die zumindest eine Sicherheitsmaßnahme.

Die Steuereinheit 18 ist ferner dazu vorgesehen, im Falle einer Erkennung eines Fremdobjekts 56, 58, zumindest eine Sicherheitsmaßnahme, beispielsweise eine Blockierung des Leistungsbetriebs der Versorgungseinheit 14 und/oder die Ausgabe eines Warnhinweises, zumindest zu initiieren. Wird während des Kommunikationszeitfensters 30 ein Messwert innerhalb des zweiten Bereichs 90 erhalten, so schließt die Steuereinheit 18 auf ein Vorhandensein eines großen Fremdobjekts 58 und initiiert die zumindest eine Sicherheitsmaßnahme. Wird während des Kommunikationszeitfensters 30 ein Messwert innerhalb des ersten Bereichs 88 erhalten, ist die Steuereinheit 18 dazu vorgesehen, die Ersatzimpedanz des Versorgungsinduktionselements 16 zu einer genaueren Unterscheidung heranzuziehen. Beispielsweise identifiziert die Steuereinheit 18 anhand der Ersatzimpedanz des Versorgungsinduktionselements 16 das Objekt 50 als die Aufstelleinheit 20 mit deaktiviertem Aufnahmeinduktionselement 24. Ferner identifiziert die Steuereinheit 18 anhand der Ersatzimpedanz des Versorgungsinduktionselements 16 beispielsweise das Objekt 48 als ein kleines Fremdobjekt 56, beispielsweise als ein metallisches Besteck oder dergleichen, und initiiert die zumindest eine Sicherheitsmaßnahme.

Figur 5 zeigt zwei schematische Diagramme zur Darstellung von Verläufen der Ersatzimpedanz und der Eigeninduktivität 34 des Versorgungsinduktionselements 16. Auf einer Abszisse 98 eines linken Diagramms der Figur 5 ist die Schaltfrequenz, mit welcher die Steuereinheit 18 die Wechselrichtereinheit zur Steuerung des Versorgungsinduktionselements 16 betreibt, in kHz aufgetragen. Auf einer Ordinate 100 des linken Diagramms ist die Ersatzimpedanz des Versorgungsinduktionselements 16 in Ω aufgetragen. Eine erste Kurve 102 in dem linken Diagramm zeigt einen Verlauf der Ersatzimpedanz des Versorgungsinduktionselements 16 über die Schaltfrequenz bei auf der Aufstellplatte 12 aufgestellter Aufstelleinheit 20 mit aktiviertem Aufnahmeinduktionselement 24. Eine zweite Kurve 104 in dem linken Diagramm zeigt einen Verlauf der Ersatzimpedanz des Versorgungsinduktionselements 16 über die Schaltfrequenz bei auf der Aufstellplatte 12 aufgestellter Aufstelleinheit 20 mit deaktiviertem Aufnahmeinduktionselement 24. Eine dritte Kurve 106 in dem linken Diagramm zeigt einen Verlauf der Ersatzimpedanz des Versorgungsinduktionselements 16 über die Schaltfrequenz ohne auf der Aufstellplatte 12 aufgestellte Aufstelleinheiten 20, 22.

Auf einer Abszisse 108 eines rechten Diagramms der Figur 5 ist die Schaltfrequenz in kHz aufgetragen. Auf einer Ordinate 110 des rechten Diagramms ist die Eigeninduktivität 34 des Versorgungsinduktionselements 16 in µH aufgetragen. Eine erste Kurve 112 in dem rechten Diagramm zeigt einen Verlauf der Eigeninduktivität 34 über die Schaltfrequenz bei auf der Aufstellplatte 12 aufgestellter Aufstelleinheit 20 mit aktiviertem Aufnahmeinduktionselement 24. Eine zweite Kurve 114 in dem rechten Diagramm zeigt einen Verlauf der Eigeninduktivität 34 über die Schaltfrequenz bei auf der Aufstellplatte 12 aufgestellter Aufstelleinheit 20 mit deaktiviertem Aufnahmeinduktionselement 24. Eine dritte Kurve 116 in dem rechten Diagramm zeigt einen Verlauf der Eigeninduktivität 34 über die Schaltfrequenz ohne auf der Aufstellplatte 12 aufgestellte Aufstelleinheiten 20, 22.

Wie den Diagrammen der Figur 5 zu entnehmen ist, kann ein Vorhandensein von Aufstelleinheiten 20, 22 auf der Aufstellplatte 12, sowie der Schaltzustand des Sicherheitsschaltelements 26 anhand der gemessenen Eigeninduktivität 34 und/oder der Ersatzimpedanz durch die Steuereinheit 18 bestimmt werden.

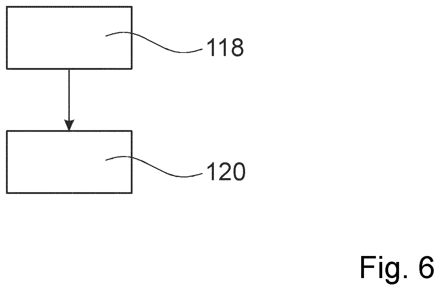

Figur 6 zeigt ein schematisches Verfahrensfließbild eines Verfahrens zum Betrieb des Induktionsenergieübertragungssystems 10. Das Verfahren umfasst zumindest zwei Verfahrensschritte 118, 120. In einem ersten Verfahrensschritt 118 des Verfahrens wird innerhalb des Kommunikationszeitfensters 30, in welchem das Aufnahmeinduktionselement 24 mittels des Sicherheitsschaltelements 26 deaktiviert ist, zumindest ein Parameter 32 ausgetauscht, und zwar zwischen der Steuereinheit 18 und der Aufstelleinheit 20 mittels der Kommunikationseinheit 28. In einem zweiten Verfahrensschritt 120 des Verfahrens wird innerhalb des Kommunikationszeitfensters 30 die Eigeninduktivität 34 des Versorgungsinduktionselements 16 gemessen.

### Bezugszeichen

- 10: Induktionsenergieübertragungssystem
- 12: Aufstellplatte
- 14: Versorgungseinheit
- 16: Versorgungsinduktionselement
- 18: Steuereinheit
- 20: Aufstelleinheit
- 22: weitere Aufstelleinheit
- 24: Aufnahmeinduktionselement
- 26: Sicherheitsschaltelement
- 28: Kommunikationseinheit
- 30: Kommunikationszeitfenster
- 32: Parameter
- 34: Eigeninduktivität
- 36: Parametersatz
- 38: Betriebszeitfenster
- 40: Korrekturfaktor
- 42: Parameter
- 44: neuer Parametersatz
- 46: Schaltzustand
- 48: Objekt
- 50: Objekt
- 52: Objekt
- 54: Objekt
- 56: Fremdobjekt
- 58: Fremdobjekt
- 60: Induktionshaushaltsgerät
- 62: Kommunikationselement
- 64: weiteres Kommunikationselement
- 66: weiteres Kommunikationselement
- 68: Begrüßungsphase
- 70: Austauschphase
- 72: Mess- und Prüfphase
- 74: Leistungsphase
- 76: Zwischenkommunikationsphase
- 78: weiteres Kommunikationszeitfenster
- 80: weiteres Betriebszeitfenster
- 82: Abszisse
- 84: Ordinate
- 86: Objekt
- 88: erster Bereich
- 90: Bereich
- 92: Bereich
- 94: Bereich
- 96: Kochtopf
- 98: Abszisse
- 100: Ordinate
- 102: erste Kurve
- 104: zweite Kurve
- 106: dritte Kurve
- 108: Abszisse
- 110: Ordinate
- 112: erste Kurve
- 114: zweite Kurve
- 116: dritte Kurve
- 118: erster Verfahrensschritt
- 120: zweiter Verfahrensschritt

## Patentansprüche

1. Induktionsenergieübertragungssystem (10), insbesondere Induktionsgarsystem, mit einer Aufstellplatte (12), mit einer unterhalb der Aufstellplatte (12) angeordneten Versorgungseinheit (14), welche zumindest ein Versorgungsinduktionselement (16) zur induktiven Bereitstellung von Energie aufweist, mit einer Steuereinheit (18) zur Steuerung der Versorgungseinheit (14), mit zumindest einer Aufstelleinheit (20, 22) zum Aufstellen auf die Aufstellplatte (12), wobei die Aufstelleinheit (20, 22) zumindest ein Aufnahmeinduktionselement (24) zu einem Empfang der induktiv bereitgestellten Energie und ein Sicherheitsschaltelement (26) zum Aktivieren und Deaktivieren das Aufnahmeinduktionselements (24) aufweist, und mit einer Kommunikationseinheit (28) zur drahtlosen Kommunikation zwischen der Aufstelleinheit (20, 22) und der Steuereinheit (18), wobei die Steuereinheit (18) dazu vorgesehen ist, innerhalb eines Kommunikationszeitfensters (30), in welchem das Aufnahmeinduktionselement (24) mittels des Sicherheitsschaltelements (26) deaktiviert ist, mit der Aufstelleinheit (20, 22) zum Ausstauch zumindest eines Parameters (32) über die Kommunikationseinheit (28) zu kommunizieren, **dadurch gekennzeichnet, dass** die Steuereinheit (18) dazu vorgesehen ist, innerhalb des Kommunikationszeitfensters (30) eine Eigeninduktivität (34) des Versorgungsinduktionselements (16) zu messen.

2. Induktionsenergieübertragungssystem (10) nach Anspruch 1, **dadurch gekennzeichnet, dass** die Steuereinheit (18) dazu vorgesehen ist, die gemessene Eigeninduktivität (34) zur Bestimmung eines Parametersatzes (36) zur Steuerung der Versorgungseinheit (14) innerhalb eines Betriebszeitfensters (38) heranzuziehen.

3. Induktionsenergieübertragungssystem (10) nach Anspruch 2, **dadurch gekennzeichnet, dass** die Steuereinheit (18) dazu vorgesehen ist, zumindest einen Korrekturfaktor (40) zumindest eines Parameters (42) des Parametersatzes (36) zu bestimmen und hierfür die gemessene Eigeninduktivität (34) als Ausgangswert heranzuziehen.

4. Induktionsenergieübertragungssystem (10) nach einem der vorhergehenden Ansprüche **dadurch gekennzeichnet, dass** die Steuereinheit (18) dazu vorgesehen ist, die gemessene Eigeninduktivität (34) zur Bestimmung eines neuen Parametersatz (44) zur Steuerung der Versorgungseinheit (14) heranzuziehen.

5. Induktionsenergieübertragungssystem (10) nach einem der vorhergehenden Ansprüche, **dadurch gekennzeichnet, dass** die Steuereinheit (18) dazu vorgesehen ist, anhand der gemessenen Eigeninduktivität (34) einen Schaltzustand (46) des Sicherheitsschaltelements (26) zu bestimmen.

6. Induktionsenergieübertragungssystem (10) nach Anspruch 5, **dadurch gekennzeichnet, dass** die Steuereinheit (18), im Falle eines während Kommunikationszeitfensters (30) geschlossenen Sicherheitsschaltelements (26), dazu vorgesehen ist, zumindest eine Sicherheitsmaßnahme zumindest zu initiieren.

7. Induktionsenergieübertragungssystem (10) nach einem der vorhergehenden Ansprüche, **dadurch gekennzeichnet, dass** die Steuereinheit (18) dazu vorgesehen ist, innerhalb des Kommunikationszeitfensters (30) eine Objekterkennung von auf der Aufstellplatte (12) befindlichen Objekten (48, 50, 52, 54) durchzuführen.

8. Induktionsenergieübertragungssystem (10) nach Anspruch 7, **dadurch gekennzeichnet, dass** die Steuereinheit (18) dazu vorgesehen ist, die gemessene Eigeninduktivität (34) zur Unterscheidung zwischen Aufstelleinheiten (20, 22) und Fremdobjekten (56, 58) heranzuziehen.

9. Induktionsenergieübertragungssystem (10) nach Anspruch 8, **dadurch gekennzeichnet, dass** die Steuereinheit (18), im Falle einer Erkennung eines Fremdobjekts (56, 58), dazu vorgesehen ist, zumindest eine Sicherheitsmaßnahme zumindest zu initiieren.

10. Aufstelleinheit geeignet für ein Induktionsenergieübertragungssystem nach einem der Ansprüchen 1 bis 9

11. Induktionshaushaltsgerät (60) geeignet für ein Induktionsenergieübertragungssystem (10) nach einem der Ansprüche 1 bis 9, welches die Versorgungseinheit (14) und die Steuereinheit (18) aufweist.

12. Verfahren zum Betrieb eines Induktionsenergieübertragungssystems (10), insbesondere eines Induktionsgarsystems, insbesondere nach einem der vorhergehenden Ansprüche, mit einer Aufstellplatte (12), mit einer unterhalb der Aufstellplatte (12) angeordneten Versorgungseinheit (14), welche zumindest ein Versorgungsinduktionselement (16) zur induktiven Bereitstellung von Energie aufweist, mit zumindest einer Aufstelleinheit (20, 22) zum Aufstellen auf die Aufstellplatte (12), wobei die Aufstelleinheit (20, 22) zumindest ein Aufnahmeinduktionselement (24) zu einem Empfang der induktiv bereitgestellten Energie und ein Sicherheitsschaltelement (26) zum Aktivieren und Deaktivieren das Aufnahmeinduktionselements (24) aufweist, wobei innerhalb eines Kommunikationszeitfensters (30), in welchem das Aufnahmeinduktionselement (24) mittels des Sicherheitsschaltelements (26) deaktiviert ist, zumindest ein Parameter (32) ausgetauscht wird, **dadurch gekennzeichnet, dass** innerhalb des Kommunikationszeitfensters (30) eine Eigeninduktivität (34) des Versorgungsinduktionselements (16) gemessen wird.

## Claims

1. Induction energy transmission system (10), in particular an induction cooking system, comprising a set-down plate (12) with a supply unit (14) arranged below the set-down plate (12) and having at least one supply induction element (16) for inductively providing energy, comprising a control unit (18) for controlling the supply unit (14), comprising at least one set-down unit (20, 22) for setting down on the set-down plate (12), wherein the set-down unit (20, 22) has at least one receiving induction element (24) for receiving the inductively provided energy and a safety switch element (26) for activating and deactivating the receiving induction element (24), and comprising a communications unit (28) for wireless communication between the set-down unit (20, 22) and the control unit (18), wherein the control unit (18) is provided such that, within a communication time window (30) in which the receiving induction element (24) is deactivated by means of the safety switch element (26), it communicates with the set-down unit (20, 22) for the exchange of at least one parameter (32) via the communications unit (28), **characterised in that** the control unit (18) is provided for measuring a self-inductance (34) of the supply induction element (16) within the communication time window (30).

2. Induction energy transmission system (10) according to claim 1, **characterised in that** the control unit (18) is provided to use the measured self-inductance (34) for determining a parameter set (36) for controlling the supply unit (14) within an operating time window (38).

3. Induction energy transmission system (10) according to claim 2, **characterised in that** the control unit (18) is provided to determine at least one correction factor (40) of at least one parameter (42) of the parameter set (36) and to use the measured self-inductance (34) as an initial value therefor.

4. Induction energy transmission system (10) according to one of the preceding claims, **characterised in that** the control unit (18) is provided to use the measured self-inductance (34) for determining a new parameter set (44) for controlling the supply unit (14).

5. Induction energy transmission system (10) according to one of the preceding claims, **characterised in that** the control unit (18) is provided to determine a switching state (46) of the safety switch element (26) on the basis of the measured self-inductance (34).

6. Induction energy transmission system (10) according to claim 5, **characterised in that** the control unit (18) is provided at least to initiate at least one safety measure in the event that a safety switch element (26) is closed during the communication time window (30).

7. Induction energy transmission system (10) according to one of the preceding claims, **characterised in that** the control unit (18) is provided to carry out within the communication time window (30) an object detection of objects (48, 50, 52, 54) located on the set-down plate (12).

8. Induction energy transmission system (10) according to claim 7, **characterised in that** the control unit (18) is provided to use the measured self-inductance (34) for differentiating between set-down units (20, 22) and foreign objects (56, 58).

9. Induction energy transmission system (10) according to claim 8, **characterised in that** the control unit (18) is provided at least to initiate at least one safety measure in the event that a foreign object (56, 58) is detected.

10. Set-down unit (20, 22) suitable for an induction energy transmission system according to one claims 1 to 9.

11. Induction household appliance (60), suitable for an induction energy transmission system (10) according to one of claims 1 to 9, which comprises the supply unit (14) and the control unit (18).

12. Method for operating an induction energy transmission system (10), in particular an induction cooking system, in particular according to one of the preceding claims, comprising a set-down plate (12) with a supply unit (14) arranged below the set-down plate (12) and having at least one supply induction element (16) for inductively providing energy, comprising at least one set-down unit (20, 22) for setting down onto the set-down plate (12), wherein the set-down unit (20, 22) has at least one receiving induction element (24) for receiving the inductively provided energy and a safety switch element (26) for activating and deactivating the receiving induction element (24), wherein at least one parameter (32) is exchanged within a communication time window (30) in which the receiving induction element (24) is deactivated by means of the safety switch element (26), **characterised in that** a self-inductance (34) of the supply induction element (16) is measured within the communication time window (30).

## Revendications

1. Système de transmission d'énergie à induction (10), notamment système de cuisson à induction, comprenant :
une plaque de support (12),
une unité d'alimentation (14) disposée sous la plaque de support (12) et comprenant au moins un élément d'induction d'alimentation (16) destiné à transmettre de l'énergie par induction,
une unité de commande (18) destinée à commander l'unité d'alimentation (14),
au moins une unité à poser (20, 22) destinée à être posée sur la plaque de support (12),
dans lequel l'unité à poser (20, 22) comprend au moins un élément récepteur d'induction (24) destiné à recevoir l'énergie transmise par induction et un élément de commutation de sécurité (26) destiné à activer et désactiver l'élément récepteur d'induction (24), et
une unité de communication (28) pour une communication sans fil entre l'unité à poser (20, 22) et l'unité de commande (18),
dans lequel l'unité de commande (18) est configurée pour communiquer avec l'unité à poser (20, 22), par l'intermédiaire de l'unité de communication (28), pendant une fenêtre temporelle de communication (30) au cours de laquelle l'élément récepteur d'induction (24) est désactivé au moyen de l'élément de commutation de sécurité (26), afin d'échanger au moins un paramètre (32),
**caractérisé en ce que** l'unité de commande (18) est configurée pour mesurer,
pendant la fenêtre temporelle de communication (30), une inductance propre (34) de l'élément d'induction d'alimentation (16).

2. Système de transmission d'énergie à induction (10) selon la revendication 1, **caractérisé en ce que** l'unité de commande (18) est configurée pour prendre en compte l'inductance propre (34) mesurée afin de déterminer un ensemble de paramètres (36) servant à commander l'unité d'alimentation (14) pendant une fenêtre temporelle de fonctionnement (38).

3. Système de transmission d'énergie à induction (10) selon la revendication 2, **caractérisé en ce que** l'unité de commande (18) est configurée pour déterminer au moins un facteur de correction (40) d'au moins un paramètre (42) de l'ensemble de paramètres (36) en prenant en compte à cet effet l'inductance propre mesurée (34) à titre de valeur de base.

4. Système de transmission d'énergie à induction (10) selon l'une des revendications précédentes, **caractérisé en ce que** l'unité de commande (18) est configurée pour prendre en compte l'inductance propre mesurée (34) afin de déterminer un nouvel ensemble de paramètres (44) destiné à commander l'unité d'alimentation (14).

5. Système de transmission d'énergie à induction (10) selon l'une des revendications précédentes, **caractérisé en ce que** l'unité de commande (18) est configurée pour déterminer un état de commutation (46) de l'élément de commutation de sécurité (26) en fonction de l'inductance propre mesurée (34).

6. Système de transmission d'énergie à induction (10) selon la revendication 5, **caractérisé en ce que** l'unité de commande (18) est configurée pour initier au moins une mesure de sécurité lorsque l'élément de commutation de sécurité (26) est fermé pendant une fenêtre temporelle de communication (30).

7. Système de transmission d'énergie à induction (10) selon l'une des revendications précédentes, **caractérisé en ce que** l'unité de commande (18) est configurée pour effectuer, dans la fenêtre temporelle de communication (30), une reconnaissance d'objet d'objets présents (48, 50, 52, 54) sur la plaque de support (12).

8. Système de transmission d'énergie à induction (10) selon la revendication 7, **caractérisé en ce que** l'unité de commande (18) est configurée pour prendre en compte l'inductance propre mesurée (34) afin de distinguer entre des unités à poser (20, 22) et des objets étrangers (56, 58).

9. Système de transmission d'énergie à induction (10) selon la revendication 8, **caractérisé en ce que** l'unité de commande (18) est configurée, en cas de détection d'un objet étranger (56, 58) pour au moins initier une mesure de sécurité.

10. Unité à poser configurée pour un système de transmission d'énergie à induction selon l'une des revendications 1 à 9.

11. Appareil électroménager à induction (60) configuré pour un système de transmission d'énergie à induction (10) selon l'une des revendications 1 à 9, lequel comprend l'unité d'alimentation (14) et l'unité de commande (18).

12. Procédé de fonctionnement d'un système de transmission d'énergie à induction (10), notamment d'un système de cuisson à induction, notamment selon l'une des revendications précédentes, comprenant une plaque de support (12), une unité d'alimentation (14) disposée sous la plaque de support (12) et comprenant au moins un élément d'induction d'alimentation (16) destiné à transmettre de l'énergie par induction, au moins une unité à poser (20, 22) destinée à être posée sur la plaque de support (12), dans lequel l'unité à poser (20, 22) comprend au moins un élément récepteur d'induction (24) destiné à recevoir l'énergie transmise par induction et un élément de commutation de sécurité (26) destiné à activer et désactiver l'élément récepteur d'induction (24), dans lequel au moins un paramètre (32) est échangé pendant une fenêtre temporelle de communication (30) au cours de laquelle l'élément récepteur d'induction (24) est désactivé au moyen de l'élément de commutation de sécurité (26), **caractérisé en ce qu'**une inductance propre (34) de l'élément d'induction d'alimentation (16) est mesurée pendant la fenêtre temporelle de communication (30).
